Europäisches Patentamt

European Patent Office

Office européen des brevets

(11) Veröffentlichungsnummer: **0 424 312 A1**

## (12) EUROPÄISCHE PATENTANMELDUNG

(21) Anmeldenummer: 90810767.5

(22) Anmeldetag: 05.10.90

(51) Int. Cl.5: **B29C 53/06**, E04B 2/32, B32B 15/08, B32B 35/00

(30) Priorität: 13.10.89 CH 3749/89

(43) Veröffentlichungstag der Anmeldung:
24.04.91 Patentblatt 91/17

(84) Benannte Vertragsstaaten:
AT BE CH DE DK ES FR GB IT LI LU NL SE

(71) Anmelder: ALUSUISSE-LONZA SERVICES AG
Feldeggstrasse 4
CH-8034 Zürich(CH)

(72) Erfinder: Ehrat, Rainer
Herblingerstrasse 114
CH-8207 Schaffhausen(CH)
Erfinder: Schlatter, Reinhard
Weinbergstrasse 8
CH-8200 Schaffhausen(CH)

(54) Biegbare Verbundplatte.

(57) Die Verbundplatte hat einen elasto-plastisch verformbaren Kern (12) und wenigstens eine einseitig angeordnete Deckschicht (14, 16) aus einem plastisch oder thermoplastisch verformbaren Material. Wenigstens eine Deckschicht (14, 16) der Verbundplatte (10) ist vorverformt und weist mindestens eine geradlinig verlaufende, sich über die ganze Breite erstreckende Sicke (28) auf, welche unter Verengung der Sicke/n ein Biegen der Verbundplatte (10) erlaubt/erlauben.

Die Verbundplatten (10) können als auf der Baustelle gebogene Bauelemente verwendet werden.

Die gebogenen Verbundplatten haben einen breiten Verwendungsbereich, insbesondere in der Architektur oder im Fahrzeugbau.

Fig. 2

EP 0 424 312 A1

## BIEGBARE VERBUNDPLATTE

Die Erfindung bezieht sich auf eine Verbundplatte mit einem elasto-plastisch verformbaren Kern und wenigstens einer einseitig angeordneten Deckschicht aus einem plastisch oder thermoplastisch verformbaren Material. Weiter bezieht sich die Erfindung auf die Verwendung der Verbundplatte.

Zur Herstellung von gebogenen bzw. gewölbten Verbundplatten mit einem Schaumkern aus Kunststoff werden heute aufwendige Klebeverfahren mit teuren Positiv- und Negativformen eingesetzt. Trotz der hohen Fertigungskosten ist die Formgebung quantitativ und qualitativ beschränkt:

- Da für jede Form spezielle Lehren hergestellt werden müssen, ist die Formenvielfalt stark eingeschränkt.

- Für das übliche Biegen von Verbundplatten wird bei kleinerem Biegeradius auf der Innenseite wenigstens eine keilförmige Nut ausgespart, welche während des Biegens wieder geschlossen wird. Nach diesem Verfahren kann die innere Deckschicht ihre Dampfsperrfunktion nicht mehr erfüllen.

Der vorliegenden Erfindung liegt die Aufgabe zugrunde, eine Verbundplatte der eingangs genannten Art zu schaffen, welche auf einfache Weise und mit kurzem Zeitaufwand erlaubt, ebene Verbundplatten nachträglich mit praktisch beliebigen Radien zu verformen, ohne die Verbundsteifigkeit wesentlich zu vermindern oder die Dampfdichtheit zu beeinträchtigen.

Die Aufgabe wird erfindungsgemäss dadurch gelöst, dass wenigstens eine Deckschicht der Verbundplatte vorverformt ist und mindestens eine geradlinig verlaufende, sich über die ganze Breite erstreckende Sicke aufweist, welche unter Verengung der Sicke/n ein Biegen der Verbundplatte erlaubt/erlauben.

Durch geometrisch definierte Sicken in einer oder beiden Deckschichten wird erfindungsgemäss der Querschnitt der Verbundplatte reduziert und Raum für das Biegen geschafft. Die geometrische Querschnittsform der Sicken ist so gestaltet, dass während des Biegens keine Schubüberbeanspruchung des Kern-Deckschicht-Verbundes entsteht. Das wenigstens teilweise Schliessen der Sicken einer Deckschicht, welche über mindestens einen bestimmten Bereich ausgebildet sind, bewirkt, dass die Verbundplatte entsprechend gebogen bzw. gewölbt oder gekrümmt werden kann, wobei die Deckschicht mit den wenigstens teilweise geschlossenen Sicken die konkav gewölbte Innenseite bildet.

Die Sicken erstrecken sich jeweils über die ganze Breite einer Deckschicht, wobei die Breite nicht rein geometrisch zu betrachten ist, Sicken können sich auch über die ganze Länge einer Verbundplatte erstrecken.

Die Sicken zweier gegenüberliegender Deckschichten sind vorzugsweise in Längsrichtung versetzt ausgebildet.

Verbundplatten mit einem elasto-plastisch verformbaren Kern aus einem thermo- oder duroplastischen Kunststoff müssen trotz ihrer elasto-plastischen Verformbarkeit auch nach dem Biegen die Anforderungen an die mechanische Steifigkeit erfüllen. Dazu eignen sich beispielsweise Schäume aus Polyvinylchlorid, Styropor, Polystyrol, Polyurethan oder Polymethacrylat.

Je nach dem Verwendungszweck kann der Kern geschlossenporig oder offenporig ausgebildet sein, feuerhemmende Zusätze, z.B. Aluminiumtrihydroxid, und/oder mechanisch verstärkende Fasern, z.B. Glas- oder Kohlenstoffasern, in dem Fachmann bekannter Konzentration enthalten.

Die Dicke des Schaumkerns liegt vorzugsweise im Bereich von 20 - 150 mm. Dicke Kerne setzen der Biegekraft einen hohen Widerstand entgegen, was zu Schubüberbeanspruchungen des Kern-Deckschicht-Verbundes führen könnte, die Sicken müssen deshalb entsprechend tief ausgeformt sein. Die Steifigkeit der Verbundplatte darf jedoch nicht zu stark vermindert werden. Wesentlich weniger als 20 mm dicke Kernschichten können dem Verbund kaum mehr eine meist erforderliche minimale Steifigkeit verleihen.

Die Deckschicht/en besteht/bestehen bevorzugt aus einem plastisch gut verformbaren Metall und/oder einem thermoplastischen Kunststoff. Die Dicke der Deckschicht/en liegt, material- und/oder verwendungsbedingt, vorzugsweise im Bereich von 0,1 - 1,5 mm. Metallische Deckschichten bestehen insbesondere aus Aluminium, einer Aluminiumlegierung, Edelstahl oder Kupfer, thermoplastische Deckschichten aus einem Hartkunststoff, wie z.B. Polyäthylen oder Polypropylen.

Der Verbund der Deckschichten mit dem Kern erfolgt mittels eines Klebstoffs.

In bezug auf den Querschnitt sind die Sicken zweckmässig V-förmig, U-förmig, vorzugsweise jeweils abgerundet, schwal benschwanzförmig oder birnenförmig ausgebildet. V-förmige Sicken mit ebenen Seitenflächen können beim Biegen vollflächig geschlossen werden, konkav ausgebildete Seitenflächen bilden beim biegebedingten Schliessen einen Hohlraum, konvex ausgebildete Seitenflächen von V-förmigen Sicken verhindern ein vollständiges Verschliessen einer Sicke.

Die Sicken werden vorzugsweise mit einer Tiefe von 10 -80%, vorzugsweise 20 - 50%, der Dicke der Verbundplatte erzeugt, sie liegen meist im Bereich von etwa 5 - 20 mm. Die mögliche Sickentiefe ist in erster Linie von der elasto-plastischen Verformbarkeit des Kerns aus Kunststoffschaum, allenfalls mit den erwähnten Zusätzen, abhängig.

Durch Variation des Abstands der Sicken, deren Tiefe, deren gegenseitigem Winkel und/oder deren Querschnittsform kann praktisch jede Biegung einer Verbundplatte, in der einen oder andern Richtung, erreicht werden. In bezug auf den Biegeradius ist die Grenze nach unten durch die Steifigkeit bzw. Elasto-Plastizität des Kernmaterials gesetzt. Die elasto-plastische Verformbarkeit von Kern und Deckschicht/en kann in einem Ausmass ausgenützt werden, das bisher nicht für möglich gehalten wurde.

Je nach der regelmässigen oder unregelmässigen Anwendung von einem oder mehreren Parametern entstehen geometrisch regelmässige oder unregelmässige Biegungsflächen. Die Verbundsteifigkeit wird nicht wesentlich beeinträchtigt, die Dampfdichtheit der plastisch verformten Deckschicht bleibt voll erhalten.

Eine mit Sicken ausgestattete Verbundplatte kann ohne spezielle Hilfsmittel, insbesondere ohne Lehren, gebogen werden, bis die Sicken geschlossen sind und so die vorausberechnete Biegungsfläche entsteht. Nach einer erfindungsgemässen Verwendung kann eine Verbundplatte als auf der Baustelle gebogenes Bauelement verwendet werden.

In den Sicken der Verbundplatte, insbesondere bei konkaven V-förmigen, U-förmigen oder hinterschnittenen Sicken, kann während des Biegens mindestens ein abkragender Gegenstand eingeklemmt sein:
- Nach einer ersten Variante werden Aufhängeorgane fest eingeklemmt, an welchen die gewölbte Verbundplatte befestigt werden kann, oder mittels welcher ein anderer Gegenstand an der gewölbten Verbundplatte aufgehängt oder befestigt werden kann.

Die Fixierung der Aufhängeorgane kann verbessert werden, indem sich ihr in die Sicke eingeführter Schaft nach hinten erweitert und/oder ein Kleber zugegeben wird.
- Nach einer zweiten Variante werden beim Biegen gleich oder ungleich dicke Kalibrierplatten in die Sicken gesteckt, womit eine vorausberechnete Biegungsfläche erreicht werden kann. Gleiche Kalibrierplatten ergeben ein Biegungsfläche mit konstantem Radius, dicker werdende Kalibrierplatten eine weniger stark gewölbte Biegungsfläche und dünnere Kalibrierplatten eine stärker gewölbte Biegungsfläche.

Die erfindungsgemässen, gebogenen bzw. gewölbten Verbundplatten haben einen breiten Verwendungsbereich, insbesondere in der Architektur oder im Fahrzeugbau. Im Hochbau können Kalt- oder dekorative Fassaden einer grossen Formenvielfalt hergestellt werden, die Innenausstattung kann massgebend geprägt oder Möbel können hergestellt werden. Im Bereich des Tiefbaus liegt eine wesentliche Verwendung im Tunnelbau, wo eine alle Sicherheitsanforderungen erfüllende, ästhetisch ansprechende Innenauskleidung hergestellt werden kann. Im Fahrzeugbau liegen wesentliche Verwendungen im Bereich der Dachgestaltung, von Fahrzeughüllen und Containern.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 einen Teilschnitt durch eine ebene Verbundplatte mit V-förmigen Sicken,
- Fig. 2 die gebogene Verbundplatte nach Fig. 1,
- Fig. 3 einen Schnitt durch eine U-förmige Sicke,
- Fig. 4 einen Schnitt durch eine birnenförmige Sicke,
- Fig. 5 einen Schnitt durch eine schwalbenschwanzförmige Sicke, und
- Fig. 6 bis 9 eine Ansicht von Verbundplatten mit verschieden angeordneten Sicken.

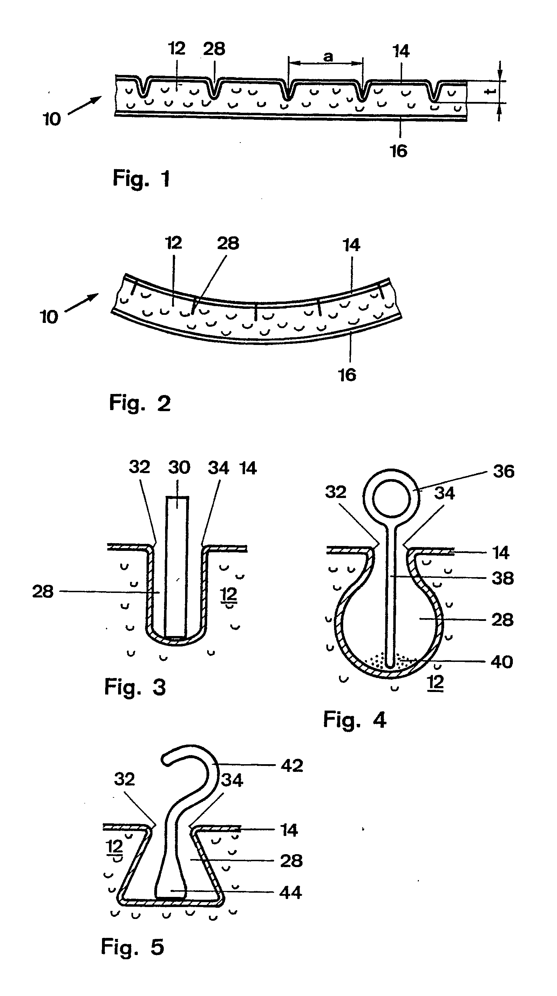

Die in Fig. 1 dargestellte Verbundplatte 10 von im wesentlichen üblicher Bauart hat einen Kern 12 aus einem thermoplastischen Kunststoff-Hartschaum und beidseitig angeordnete, etwa 0,9 mm dicke Deckschichten 14, 16 aus einer duktilen Aluminiumlegierung. Die obere Deckschicht 14 weist jedoch in regelmässigen Abständen a querschnittlich V-förmige Sicken 28 mit geraden Seitenwänden auf. Die Sicken haben eine Tiefe t, welche 50% der gesamten Dicke der Verbundplatte 10 ausmacht.

In Fig. 2 ist die Verbundplatte 10 von Fig. 1 so weit gebogen, dass die V-förmigen Sicken 28 gerade geschlossen sind. Dank der in gleichmässigem Abstand a angeordneten V-förmigen Sicken 28 mit gleicher Tiefe t und gleichem Oeffnungswinkel wird die untere Deckschicht 16, die Aussenfläche der gebogenen Verbundplatte 10, im wesentlichen zylindermantelförmig gebogen.

Die abgerundete, querschnittlich U-förmige Sicke 28 gemäss Fig. 3 enthält eine Kalibrierplatte 30. Während des Biegens der Verbundplatte verengt sich der Zwischenraum zwischen den Rändern 32, 34 der Sicke 28 und Kalibrierplatte 30. Beim Aufliegen der Ränder 32, 34 auf der Kalibrierplatte 30 ist die Biegung beendet. Je nach der Dicke der Kalibrierplatte 30 ist der Biegungsradius der Verbundplatte grösser oder kleiner.

Nach beendeter Biegung wird die Kalibrierplatte 30 aus der deformierten Sicke 28 herausgezogen. Die offene Sicke kann gegebenenfalls mit einer Füllmasse ausgestrichen werden.

In die im Querschnitt birnenförmig ausgebildete Sicke 28 gemäss Fig. 4 ist eine Oese 36 mit einem Schaft 38 gesteckt. Dieser Schaft 38 steckt in einem langsam aushärten den Kleber 40. Während des Biegens der Verbundplatte 10 verengt sich der Zwischenraum zwischen den Rändern 32, 34 und dem Schaft 38 der Oese, bis dieser verklemmt wird. Je nach der erforderlichen Tragkraft der Oese 36 kann der Kleber 40 weggelassen werden, jedoch nur wenn der Schaft 38 entsprechend sitzfest eingeklemmt werden kann.

Die in Fig. 5 dargestellte, querschnittlich schwalbenschwanzförmige Sicke 28 enthält einen Haken 42 mit sich nach hinten erweiterndem Schaft 44. Beim Biegen der Verbundplatte 10 verengt sich die Sicke 28, bis die Ränder 32, 34 den Schaft 44 des Hakens festklemmen. Die schwalbenschwanzförmige Sicke 28 und der sich nach hinten erweiternde Schaft 44 verhindern ein Ausreissen des Hakens 42 auch ohne Kleber wirkungsvoll.

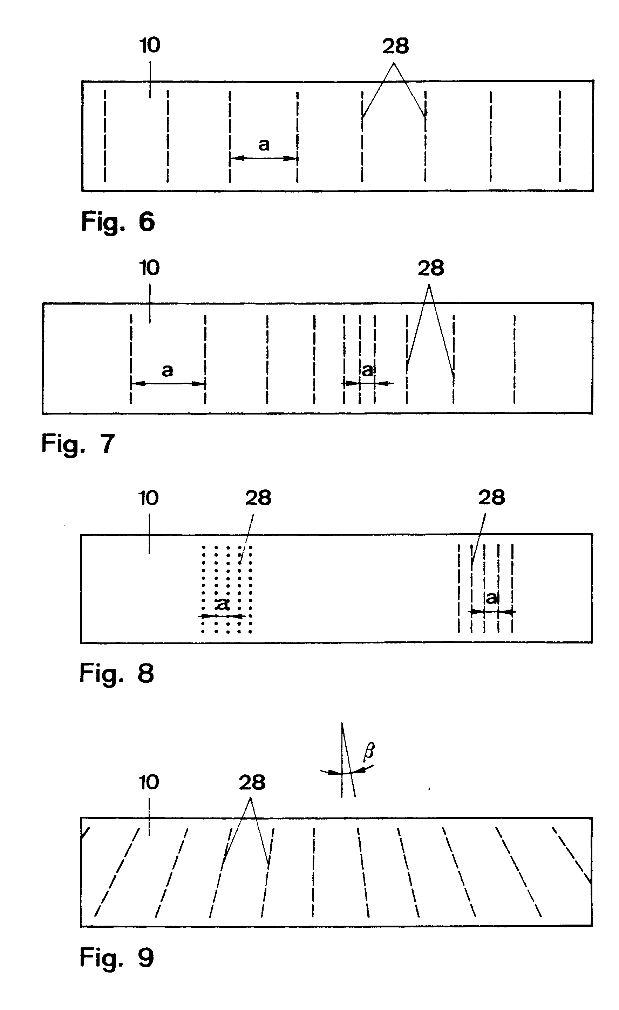

Die in Fig. 6 dargestellte Verbundplatte 10 weist in regelmässigen Abständen a gestrichelt dargestellte Sicken 28 auf. Die gleich tief ausgebildeten, parallel verlaufenden Sicken 28 erstrecken sich über die ganze Breite der Verbundplatte 10. Aus Fig. 6 resultiert eine mit regelmässigem Biegeradius gekrümmte Verbundplatte 10, wie sie im Prinzip in den Fig. 1 und 2 dargestellt ist.

Nach Fig. 7 haben die Sicken 28 im mittleren Bereich einen kleineren Abstand a als im äusseren. Daraus resultiert eine Verbundplatte 10, die im mittleren Bereich stärker gebogen ist als aussen.

Werden die Sicken 28 gemäss Fig. 7 alternierend auf der oberen und der unteren Deckschicht angebracht, entsteht eine wellenförmig gebogene Verbundplatte 10. Die Sicken 28 in der oberen und der unteren Deckschicht der Verbundplatte 10 überlappen vorzugsweise nicht, d.h. sie sollten in Längsrichtung versetzt sein, weil sonst keine üblicherweise gewünschte geschlossene Biegeaussenfläche entsteht.

Die in Fig. 8 dargestellte Verbundplatte 10 zeigt paketweise angebrachte Sicken 28 in unter sich regelmässigem Abstand a. Die gestrichelt eingezeichneten Sicken 28 sind in der oberen Deckschicht, die punktiert eingezeichneten Sicken 28 in der unteren Deckschicht angebracht. Zwischen den Paketen sind keine Sicken 28 vorhanden. Aus dieser Anordnung der Sicken 28 resultiert eine im wesentlichen Z-förmig gebogene Verbundplatte 10 mit regelmässigem Abrundungsradius.

Eine nicht dargestellte, im wesentlichen U-förmige Gestaltung des Verbundprofils könnte erreicht werden, wenn beide Pakete von Sicken 28 in der oberen oder in der unteren Deckschicht angeordnet wären.

Fig. 9 zeigt eine Verbundplatte 10 mit in einem gleichbleibenden Winkel $\beta$ verlaufenden Sicken 28. Aus dieser Anordnung entsteht eine kegelstumpfförmig gebogene Verbundplatte 10. Die Tiefe der Sicken 28 kann gleichmässig oder in Richtung der zusammenlaufenden Sicken zunehmend sein.

Aus der Anordnung der Sicken 28, welche beispielsweise in den Fig. 6 - 9 dargestellt sind, ergibt sich, dass durch eine Kombination der Parameter Abstand, Winkel, Tiefe und Querschnittsform von Sicken eine grosse Varianz von Biegungsformen erreichbar ist, ohne dass je eine Lehre gebraucht würde.

## Ansprüche

1. Verbundplatte mit einem elasto-plastisch verformbaren Kern (12) und wenigstens einer einseitig angeordneten Deckschicht (14, 16) aus einem plastisch oder thermoplastisch verformbaren Material, dadurch gekennzeichnet, dass wenigstens eine Deckschicht (14, 16) der Verbundplatte (10) vorverformt ist und mindestens eine geradlinig verlaufende, sich über die ganze Breite erstreckende Sicke (28) aufweist, welche unter Verengung der Sicke/n ein Biegen der Verbundplatte (10) erlaubt/erlauben.

2. Verbundplatte nach Anspruch 1, dadurch gekennzeichnet, dass die Sicken (28) in bezug auf den Querschnitt V-förmig, U-förmig, vorzugsweise jeweils abgerundet, schwalbenschwanzförmig oder birnenförmig ausgebildet sind.

3. Verbundplatte nach Anspruch 1 oder 2, dadurch gekennzeichnet, dass die Sicken (28) mit einer Tiefe (t) von 10 - 80%, vorzugsweise 20 - 50%, der Dicke der Verbundplatte (10) ausgebildet sind.

4. Verbundplatte nach einem der Ansprüche 1 - 3, dadurch gekennzeichnet, dass zur Herstellung einer mit regelmässigem Radius gebogenen Verbundplatte (10) parallele Sicken (28) in regelmässigen Abstand (a), Tiefe (t) und Querschnittsform ausgebildet sind.

5. Verbundplatte nach einem der Ansprüche 1 - 3, dadurch gekennzeichnet, dass zur Herstellung einer zunehmend gebogenen Verbundplatte (10) parallele Sicken (28) in abnehmendem Abstand (a), zur Herstellung einer abnehmend gebogenen Verbundplatte (10) parallele Sicken (28) in zunehmendem Abstand (a) ausgebildet sind, wobei die Tiefe (t) und die Querschnittsform der Sicken (28) jeweils konstant sind.

6. Verbundplatte nach einem der Ansprüche 1 - 3, dadurch gekennzeichnet, dass zur Herstellung einer zunehmend gebogenen Verbundplatte (10) parallele Sicken (28) mit zunehmender Tiefe (t) und gleichmässigem oder abnehmendem Abstand (a), zur Herstellung einer abnehmend gebogenen Verbundplatte (10) parallele Sicken (28) mit abnehmender Tiefe (t) und gleichmässigem oder zunehmendem Abstand (a) ausgebildet sind, wobei die Querschnittsform der Sicken (28) konstant ist.

7. Verbundplatte nach Anspruch 5 oder 6, dadurch gekennzeichnet, dass zur Herstellung einer Wellenform einer Verbundplatte (10) mit beidseits angeordneten Deckschichten (14, 16) die Sicken (28) alternierend versetzt auf beiden Deckschichten (14, 16) ausgebildet sind.

8. Verbundplatte nach einem der Ansprüche 1 - 3, dadurch gekennzeichnet, dass zur Herstellung einer kegelstumpfförmig gebogenen Verbundplatte (10) in einem gleichbleibenden, spitzen Winkel ($\beta$) verlaufende Sicken (22) mit gleicher Tiefe (t) und Querschnittsform ausgebildet sind.

9. Verwendung einer Verbundplatte (10) nach einem der Ansprüche 1 - 8 als auf der Baustelle gebogenes Bauelement.

10. Verwendung einer Verbundplatte (10) nach einem der Ansprüche 1 - 9 zum Biegen und Einklemmen mindestens eines abkragenden Gegenstandes (30, 38, 44) in der/den Sicke/n (28).

**Fig. 1**

**Fig. 2**

**Fig. 3**

**Fig. 4**

**Fig. 5**

6

Fig. 6

Fig. 7

Fig. 8

Fig. 9

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 409 855 (CHOLLET) <br> * Ansprüche 1,8; Figuren * <br> − − − | 1,2,4 | B 29 <br> C 53/06 <br> E 04 B 2/32 |
| A | FR-A-2 017 391 (ICI) <br> * Seite 5, Zeile 31 - Seite 8, Zeile 3; Figuren 5,6,12 * <br> − − − | 1,2,9 | B 32 B 15/08 <br> B 32 B 35/00 |
| A | DE-A-1 928 399 (SÜLLHÖFER) <br> * Ansprüche; Figuren * <br> − − − − − | 1 | |

| RECHERCHIERTE SACHGEBIETE (Int. Cl.5) |
|---|
| B 32 B <br> B 29 C <br> E 04 C <br> B 63 B |

Der vorliegende Recherchenbericht wurde für alle Patentansprüche erstellt

| Recherchenort | Abschlußdatum der Recherche | Prüfer |
|---|---|---|
| Den Haag | 04 Januar 91 | MCCONNELL C.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument